# EUROPEAN PATENT APPLICATION

(11) **EP 3 065 450 A1**
(43) Date of publication of application: **07.09.2016**
(21) Application number: 14857752.1
(22) Date of filing: 09.06.2014
(51) Int. Cl.: H04W 28/02, H04W 92/04

(54) **CORE NETWORK DEVICE, WIRELESS TERMINAL, AND COMMUNICATION CONTROL METHOD THEREFOR**

(30) Priority: 31.10.2013 JP 2013227627
(71) Applicant: NEC Corporation, Tokyo 108-8001 (JP)
(72) Inventor: IWAI, Takanori, Tokyo 108-8001 (JP)
(74) Representative: Vossius & Partner Patentanwälte Rechtsanwälte mbB
(86) International application number: PCT/JP2014/003064
(87) International publication number: WO 2015/063970

(57) **Abstract**

A core network apparatus (300) exchanges Non-Access Stratum (NAS) messages with a radio terminal (100) via a radio access network (20). Moreover, the core network apparatus (300) is configured to notify the radio terminal (100) of communication scheduling information that specifies a period or cycle in which the radio terminal (100) is allowed to perform communication using a bearer (S5/S8 bearer and an S1 bearer) in a core network (30). It is thus possible, for example, to contribute to Non-Access Stratum (NAS)-level load leveling on communication of radio terminals that use bearer resources in a core network.

## Description

### Technical Field

The present application relates to a mobile communication system, and in particular, to Non-Access Stratum (NAS) level communication control.

### Background Art

A multiple access mobile communication system enables radio terminals to perform wireless communication substantially at the same time by allowing the radio terminals to share radio resources including at least one of time, frequencies, and transmission power. Typical multiple access techniques are: Time Division Multiple Access (TDMA), Frequency Division Multiple Access (FDMA), Code Division Multiple Access (CDMA), Orthogonal Frequency Division Multiple Access (OFDMA), or any combination thereof. Unless specifically stated otherwise, the term "mobile communication system" used in this specification refers to a multiple access mobile communication system.

The mobile communication system includes radio terminals and a network. The network includes a Radio Access Network (RAN) and a core network. Each radio terminal communicates with an external network (e.g., the Internet, packet data network, and Public Switched Telephone Network (PSTN)) through the RAN and the core network. The mobile communication system is, for example, a Universal Mobile Telecommunications System (UMTS) or an Evolved Packet System (EPS) of the 3rd Generation Partnership Project (3GPP). The RAN is, for example, a Universal Terrestrial Radio Access Network (UTRAN) or an Evolved UTRAN (E-UTRAN). The core network is, for example, a General Packet Radio Service (GPRS) packet core or an Evolved Packet Core (EPC).

The RAN includes base stations and a radio resource management function. The radio resource management function may be implemented in a RAN node different from the base stations or may be implemented in each of the base stations. For example, in the UMTS, the radio resource management function is implemented in a Radio Network Controller (RNC). On the other hand, in the EPS, the radio resource management function is implemented in each base station (eNB).

The core network includes one or more transfer nodes that relay traffic and also includes one or more control nodes that perform mobility management, session management (bearer management), etc. The transfer node function and the control node function may be integrally implemented in one node, for example, like a Serving GPRS Support Node (SGSN) in a Packet Switched (PS) domain and a Mobile-services Switching Center (MSC) in a Circuit Switched (CS) domain in the UMTS. The control node sends and receives Non-Access Stratum (NAS) messages to and from the radio terminals. The NAS messages are signaling messages that are not terminated at the RAN and transparently transmitted between the radio terminals and the core network without depending on the radio access technology of the RAN. The NAS messages sent from the radio terminals to the core network include NAS request messages such as an attach request, a session (bearer) request, and a location update request. For example, in the case of the EPS, the NAS request messages from the radio terminals include at least one of an Attach Request, a Service Request, a PDN connectivity request, a Bearer Resource Allocation Request, a Bearer Resource Modification Request, a Tracking Area Update (TAU) Request, and a Routing Area Update (RAU) Request. On the other hand, the NAS messages sent from the core network to the radio terminals include an ACCEPT message and a REJECT message that are replies to the NAS request messages.

NAS level congestion control that reduces an overload or congestion in the core network is known (e.g., see Non-Patent Literature 1 and Patent Literature 1). Non-Patent Literature 1 discloses Access Point Name (APN) based session management congestion control and mobility management congestion control, and also discloses general NAS level mobility management congestion control. An APN is an identifier of an external network used in the EPS. The APN based congestion control is performed to reduce an overload or congestion related to a particular APN. The general NAS level mobility management congestion control is performed under general overload situations independent of a particular APN. When such NAS level congestion control is performed, a Mobility Management Entity (MME) rejects NAS requests regarding session management or mobility management sent from radio terminals. The MME is a control node within a core network of the EPS (Evolved Packet Core (EPC)). If a NAS request from a radio terminal is rejected, the radio terminal activates a NAS back-off timer and stops sending new NAS requests until the NAS back-off timer expires, with some exceptions such as a detach (disconnect of a connection), an emergency call, and a response to a paging. In the EPS, the NAS back-off timer is referred to as a Session Management back-off timer, a Mobility Management back-off timer, a back-off timer T3346, etc.

A length of a timer value of the NAS back-off timer (i.e., a back-off time) is designated by the core network. For example, a reject message, sent to a radio terminal by a control node (e.g., MME, SGSN) located within the core network to reject a NAS request, includes designation of the back-off timer value. The control node (e.g., MME) needs to avoid a number of radio terminals almost simultaneously sending NAS requests postponed by their back-off timers. In view of this, Non-Patent Literature 1 describes that each NAS back-off timer value should be selected so that the postponed NAS requests do not simultaneously occur.

Non-Patent Literature 1 also describes a method to cope with an overload related to Machine Type Communication (MTC). The MTC is also referred to as Machine-to-Machine (M2M) communication or sensor network communication. When the MTC is incorporated in a mobile communication system, the radio terminal function is implemented in machines (e.g., vending machines, smart meters, automobiles, railroad vehicles) and sensors (e.g., sensors related to the environment, agriculture, or transportation). Radio terminals for the MTC are referred to as MTC devices. Non-Patent Literature 1 describes that back-off timer values applied to MTC devices may be randomized in order to prevent repetition of a load peak caused by concentrated communication of the MTC devices. Non-Patent Literature 1 further describes that the radio terminal for the MTC device may be configured as a low-priority terminal, and a long back-off timer value may be assigned to the low-priority terminal. Furthermore, Non-Patent Literature 1 describes that the low-priority terminal sends a low-priority identifier to an MME during a NAS signaling procedure. The low priority identifier is used to determine whether or not the MME accepts the NAS request from the radio terminal.

Patent Literature 1 discloses MTC congestion control including NAS level congestion control to block communication of a particular MTC application. For example, when a network node (e.g., MME, SGSN) receives a NAS request (e.g., PDN Connectivity Request or Attach Request) from a MTC device relating to the particular MTC application, the network node sends a reject message including designation of a back-off timer value. The particular MTC application may be identified by an APN or an MTC group identifier. In addition, random back-off timer values may be assigned to different MTC devices belonging to the same MTC group in order to avoid overload of the network when back-off timers of the MTC devices expire. Patent Literature 1 also describes that a back-off timer value may be sent to a radio terminal by an accept message (e.g., Attach Accept message, RAU Accept message, or TAU Accept message) responding to a NAS request from the radio terminal.

### Citation List

### Patent Literature

Patent Literature 1: US Patent Application Publication No. 2011/0199905

### Non Patent Literature

Non-Patent Literature 1: 3GPP TS 23.401 V11.6.0 (2013-06) "3rd Generation Partnership Project; Technical Specification Group Services and System Aspects; General Packet Radio Service (GPRS) enhancements for Evolved Universal Terrestrial Radio Access Network (E-UTRAN) access (Release 11)", June 2013.

### Summary of Invention

### Technical Problem

The NAS level congestion control disclosed in Non-Patent Literature 1 and Patent Literature 1 is a mechanism that reduces congestion in the core network. Accordingly, when congestion occurs or when congestion is likely to occur, a control node (e.g., MME, SGSN) in the core network initiates back-off by specifying a NAS back-off time in a NAS reject messages (e.g., Attach reject, Service reject, and TAU reject). That is, the NAS level congestion control is performed only when congestion occurs or when congestion is likely to occur. Therefore, the NAS level congestion control may be insufficient for load leveling on communication of radio terminals that use bearer resources in the core network while no congestion is occurring.

The present inventor has studied improvement for NAS-level load leveling on communication of radio terminals that use bearer resources in the core network. Therefore, an object to be achieved by embodiments disclosed in this specification is to provide a core network apparatus, a radio terminal, a communication control method, and a program that contribute to NAS-level load leveling on communication of radio terminals that use bearer resources in a core network. Other objects or problems and novel features will become apparent from the following description and the accompanying drawings.

### Solution to Problem

In a first aspect, a core network apparatus includes a control unit configured to exchange Non-Access Stratum (NAS) messages with a radio terminal via a radio access network and notify the radio terminal of communication scheduling information. The communication scheduling information specifies a period or cycle in which the radio terminal is allowed to perform communication using a bearer in a core network.

In a second aspect, a radio terminal includes a control unit configured to exchange Non-Access Stratum (NAS) messages with a core network apparatus via a radio access network and receive communication scheduling information from the core network apparatus. The communication scheduling information specifies a period or cycle in which the radio terminal is allowed to perform communication using a bearer in a core network.

In a third aspect, a communication control method performed by a core network apparatus includes notifying a radio terminal of communication scheduling information that specifies a period or cycle in which the radio terminal is allowed to perform communication using a bearer in a core network.

In a fourth aspect, a communication control method performed by a radio terminal includes receiving, from a core network apparatus, communication scheduling information that specifies a period or cycle in which the radio terminal is allowed to perform communication using a bearer in a core network.

In a fifth aspect, a program includes instructions that cause a computer to perform the communication control method according to the third aspect.

In a sixth aspect, a program includes instructions that cause a computer to perform the communication control method according to the fourth aspect.

### Advantageous Effects of Invention

According to the above aspects, it is possible to provide a core network apparatus, a radio terminal, a communication control method, and a program that contribute to NAS-level load leveling on communication of radio terminals that use bearer resources in a core network.

### Brief Description of Drawings

Fig. 1 is a block diagram showing a configuration example of a mobile communication system according to an embodiment of the present invention;
Fig. 2 is a diagram showing an example of communication allowed cycles applied to UE in a first embodiment;
Fig. 3 is a block diagram showing a configuration example of a radio terminal according to the first embodiment;
Fig. 4 is a block diagram showing a configuration example of a mobility management node according to the first embodiment;
Fig. 5 is a flowchart showing an example of an operation of the mobility management node according to the first embodiment;
Fig. 6 is a flowchart showing an operation of the radio terminal according to the first embodiment;
Fig. 7 is a sequence diagram showing an example of a communication control method according to the first embodiment;
Fig. 8 is a sequence diagram showing an example of the communication control method according to the first embodiment;
Fig. 9 is a sequence diagram showing an example of the communication control method according to the first embodiment;
Fig. 10 is a sequence diagram showing an example of the communication control method according to the first embodiment;
Fig. 11 is a sequence diagram showing an example of the communication control method according to the first embodiment;
Fig. 12 is a sequence diagram showing an example of a communication control method according to a third embodiment;
Fig. 13 is a flowchart showing an example of an operation of a base station according to the third embodiment; and
Fig. 14 is a block diagram showing a configuration example of the base station according to the third embodiment.

### Description of Embodiments

Hereinafter, specific embodiments will be described in detail with reference to the drawings. Note that in the drawings, the same elements are denoted by the same reference signs, and repeated descriptions will be omitted as needed for clarity of the explanation.

### First embodiment

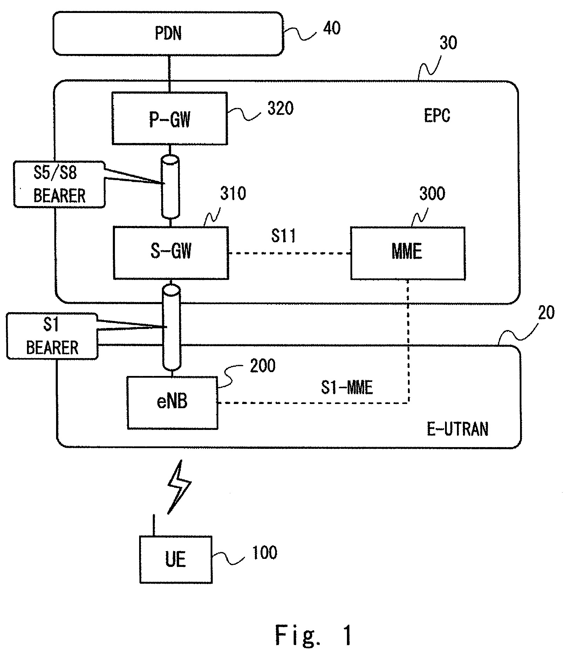

Fig. 1 shows a configuration example of a mobile communication system according to some embodiments including the first embodiment. The mobile communication system includes a Radio Access Network (RAN) 20 and a core network 30. The RAN 20 includes a base station 200. The base station 200 is connected to a radio terminal 100 by radio access technology. The RAN 20 is, for example, a Universal Terrestrial Radio Access Network (UMTS), an Evolved UTRAN (E-UTRAN), or a combination thereof. In the UTRAN, the base station 200 corresponds to a NodeB and an RNC. In the E-UTRAN, the base station 200 corresponds to an E-UTRAN NodeB (eNB). Although Fig. 1 illustrates only one radio terminal 100 and one base station 200 for convenience sake, the mobile communication system may include a plurality of the radio terminals 100 and a plurality of the base stations 200.

The radio terminal 100 having a wireless interface is connected to the base station 200 using radio access technology, and is connected to the core network 30 through the RAN 20. The radio terminal 100 communicates with an external network 40 through the RAN 20 and the core network 30. The external network 40 is the Internet, a packet data network, a PSTN, or any combination thereof.

The core network 30 is a network mainly managed by an operator that provides mobile communication services. The core network 30 is a Circuit Switched (CS) core, a Packet Switched (PS) core, or any combination thereof. The core network 30 is, for example, an EPC in the EPS, a General Packet Radio Service (GPRS) packet core in the UMTS, or a combination thereof. In the example shown in Fig. 1, the core network 30 includes a mobility management node 300, a transfer node 310, and a transfer node 320.

The mobility management node 300 is a control plane node and performs management, regarding the radio terminal 100, including mobility management (e.g., attachment and location registration) and session (bearer) management (e.g., bearer establishment, bearer modification, and bearer release). The mobility management node 300 sends and receives NAS messages to and from the radio terminal 100. For example, in the case of UMTS, the mobility management node 300 includes a control plane function of an SGSN. In the case of EPS, the mobility management node 300 includes an MME.

The transfer nodes 310 and 320 provide a user plane function including circuit switching or transfer of user data transmitted and received between the radio terminal 100 and the external network 40. For example, the transfer nodes 310 and 320 set up bearers for transferring user data (data packets) of the radio terminal 100 based on an instruction from the mobility management node 300, and provide the radio terminal 100 with bearer resources to communicate with the external network. In the case of UMTS, the transfer nodes 310 and 320 include a user plane function of an MSC, a user plane function of an SGSN, and a Gateway GPRS Support Node (GGSN). In the case of EPS, the transfer nodes 310 and 320 include a Serving Gateway(S-GW) and a PDN Gateway (P-GW).

Hereinafter, a case in which the mobile communication system according to this embodiment is the EPS is mainly described as an example. Accordingly, the RAN 20 corresponds to an E-UTRAN, the core network 30 corresponds to an EPC, and the external network corresponds to a Packet Data Network (PDN). The radio terminal 100 corresponds to a User Equipment (UE), the base station 200 corresponds to an eNB, the mobility management node 300 corresponds to an MME, the transfer node 310 corresponds to an S-GW, and the transfer node 320 corresponds to a P-GW.

The MME 300 according to this embodiment schedules, at the NAS level, a period or cycle in which the UE 100 is allowed to perform communication using a bearer in the core network 30 (i.e., S5/S8 bearer and S1 bearer). In other words, the MME 300 according to this embodiment operates to notify the UE 100 of communication scheduling information. The communication scheduling information specifies the period or cycle in which the UE 100 is allowed to perform communication using a bearer in the core network 30.

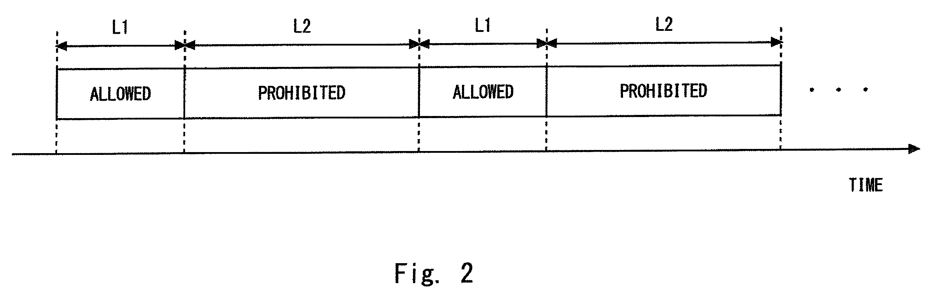

For example, as shown in Fig. 2, the MME 300 may schedule a periodic communication allowed cycle to the UE 100. In the example shown in Fig. 2, a communication allowed period having a length of L1 and a communication prohibited period having a length of L2 are configured for the UE 100 alternately and periodically. The UE 100 can perform communication using the bearer resources in the core network 30 during the communication allowed period. On the other hand, the UE 100 refrains from performing communication using the bearer resources in the core network 30 during the communication prohibited period. In some implementations, the MME 300 may set the communication allowed period for ten minutes from the minute 00 to 10 every hour and set the communication prohibited period for the remaining 50 minutes every hour. It is obvious that the MME 300 may perform scheduling by other cycles such as a 30-minute cycle, a two-hour cycle, a twelve-hour cycle, or a 24-hour cycle instead of or in combination with the above one-hour cycle.

Further or alternatively, when the MME 300 starts communication with the UE 100 by allocating the bearer resources in the core network 30 to the UE 100, i.e., when the UE 100 transitions from the ECM-IDLE state to the ECM-CONNECTED state, the MME 300 may explicitly notify the UE 100 of one or more communication allowed periods. For example, the MME 300 may notify the UE 100 that a next one minute is a first communication allowed period, and one minute after 20 minutes is a second communication allowed period. That is, the MME 300 may specify the communication allowed period every time the UE 100 starts communication. The UE 100 submits to this procedure and thereby the communication cycle of the UE 100 can be scheduled.

The MME 300 may perform the above-mentioned NAS level communication scheduling so as to distribute uniformly the communication timings of the UEs 100 that have attached to the core network. In some implementations, the MME 300 may divide one hour into six time periods each including ten minutes and adjust the time periods to be assigned to the respective UEs 100 so that the number of UEs 100 which are allowed to perform communication in each time period is the same level.

The UE 100 can send a new NAS request during the communication allowed period or the communication allowed cycle in accordance with the communication scheduling information from the MME 300. On the other hand, the UEs 100 stop sending a new NAS request during the communication prohibited period or the communication prohibited cycle with some exceptions. Such exceptions are, for example, at least one of a detach (disconnect of a connection), an emergency call, and a response to paging.

It is preferred that the MME 300 performs the NAS level communication scheduling at a normal period when there is no congestion. It is thus possible to distribute uniformly the communications of the UEs 100, which use the bearer resources in the core network 30, at the NAS level while no congestion is occurring.

In order to perform communication scheduling on the UEs 100 at a normal time when no congestion is occurring, the NAS reject messages (e.g., Attach reject, Service reject, and TAU reject) that are used to notify the UEs of back-off times in the NAS level congestion control may not be appropriate. This is because the communication of the UE 100 should be allowed at the normal time in principle. Therefore, the MME 300 may notify the UE 100 of the communication scheduling information, for example, when a NAS request (e.g., a service request) from the UE 100 to establish a bearer is accepted, when the bearer in the core network 30 has been established for the UE 100 (i.e., when the UE 100 is in the ECM-CONNECTED state and can perform user plane communication), or when the UE 100 transitions from the ECM-CONNECTED state to the ECM-IDLE state. It is thus possible to schedule the communication allowed period or allowed cycle to the UE 100 during or after the procedure for allowing the UE 100 to perform user plane communication (e.g., data calls and voice calls).

For example, in response to accepting a NAS request (e.g., an Attach request, a Service request, and a TAU request) from the UE 100, the MME 300 may send the communication scheduling information using a NAS accept message (e.g., an Attach accept, a Service accept, and a TAU accept) to the UE 100. Thus, the MME 300 can schedule the communication allowed period or allowed cycle to the UE 100 in response to accepting a NAS request from the UE 100.

Further or alternatively, the MME 300 may send the communication scheduling information to the UE 100 in response to: establishment of the bearer for the UE 100; modification of the established bearers; release of the established bearers; or a detach of the UE 100 from the core network 30. Thus, the MME 300 can schedule the communication allowed period or allowed cycle to the UE 100 when the communication of the UE 100 is allowed, when the communication of the UE 100 has already been allowed, or when the communication of the UE 100 is ended.

Further or alternatively, the MME 300 may send the communication scheduling information to the UE 100 using any NAS message when the UE 100 is in the ECM-CONNECTED state. The ECM-CONNECTED state is a state in which the bearer in the core network 30 has been established for the UE 100 and is available for the UE 100, i.e., a state in which the UE 100 can send and receive user data. Thus, the MME 300 can schedule the communication allowed period or allowed cycle to the UE 100 when the communication of the UE 100 has already been allowed.

The MME 300 may receive, from a subscriber server, information indicating the communication schedule of the UE 100 or information necessary to determine the communication schedule of the UE 100. The subscriber server is a database that holds subscriber data of the radio terminal 100 and corresponds, for example, to a Home Subscriber Server (HSS) or a Home Location Server (HLR). In response to a request from the mobility management node 300, the subscriber server sends the subscriber data to the mobility management node 300

In some implementations, the mobility management node 300 may receive from the subscriber server the subscriber data indicating a period or cycle in which the UE 100 is allowed to perform the communication using a bearer in the core network 30. Alternatively, the mobility management node 300 may receive, from the subscriber server, information necessary to determine the communication schedule of the UE 100. The information necessary to determine the communication schedule of the UE 100 includes, for example, type (model) information of the UE 100. Traffic amount per communication, a communication interval, time tolerance (delay tolerance) and the like differ among different terminal types such as smart phones, MTC devices and the like. Accordingly, the mobility management node 300 may determine the communication schedule applied to the UE 100 based on the type (model) information of the UE 100. The type information of the UE 100 may indicate as to whether it is a general mobile terminal (e.g., a mobile phone, a smartphone, and a tablet computer) or an MTC device. The type information of the UE 100 may be provided based on a difference in devices on which the UE 100 is mounted, such as an automobile, a railroad vehicle, and a vending machine.

The information necessary to determine the communication schedule of the UE 100 may be, for example, a Quality Class Identifier (QCI), software version, or charging type regarding the UE 100. The MME 300 may determine the communication schedule of the UE 100 according to the QCI, software version, charging type regarding the UE 100. For example, the MME 300 may determine the communication schedule of the UE 100 by assigning, to the UE 100, one of communication allowed periods or cycles that are defined for respective QCIs.

The MME 300 may change the communication allowed period or allowed cycle of the UE 100 according to the time of day (e.g., whether it is nighttime or daytime).

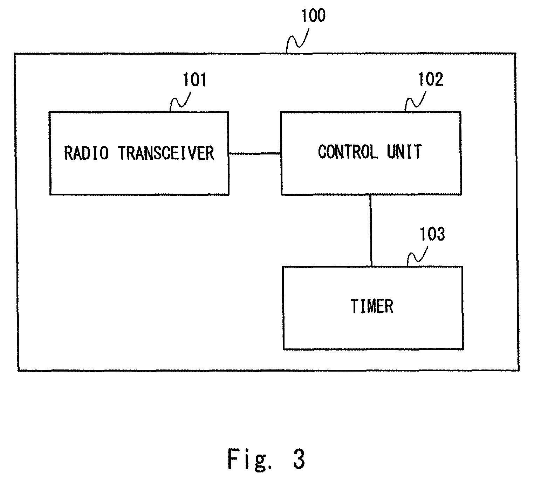

Hereinafter, configurations and operations of the UE 100 and the MME 300 are described in more detail. Fig. 3 shows a configuration example of the UE 100. In the example shown in Fig. 3, the radio terminal 100 includes a radio transceiver 101, a control unit 102, and a timer 103. The radio transceiver 101 includes a function to communicate with the E-UTRAN 20 and establishes a radio connection with the eNB 200. That is, the radio transceiver 101 receives a downlink signal including physical downlink channels from the eNB 200. Moreover, the radio transceiver 101 sends an uplink signal including physical uplink channels to the eNB 200.

The control unit 102 sends and receives signaling messages to and from the E-UTRAN 20 and the EPC 30 via the radio transceiver 101 and controls the radio transceiver 101 to send and receive user data. Further, the control unit 102 receives the NAS level communication scheduling information from the MME 300. The control unit 102 activates the timer 103 to measure the communication allowed period or allowed cycle specified by the communication scheduling information. The timer 103 may include, for example, a first timer that measures the communication allowed period, in which the communication using a bearer in the core network 30 is allowed, and a second timer that measures the communication prohibited period, in which the communication using the bearer is prohibited. The first timer and the second timer are activated complementary to each other.

To be more specific, the control unit 102 may permit sending a new NAS request until the first timer expires. The NAS request message may include at least one of a Service Request, a PDN Connectivity Request, a Bearer Resource Allocation Request, a Bearer Resource Modification Request, an Attach Request, and a Tracking Area Update Request. Then, in response to expiration of the first timer, the control unit 102 activates the second timer. The control unit 102 may stop sending a new NAS request until the second timer expires with some exceptions. Such exceptions are, for example, at least one of a detach (disconnection of connection), an emergency call, and response to paging.

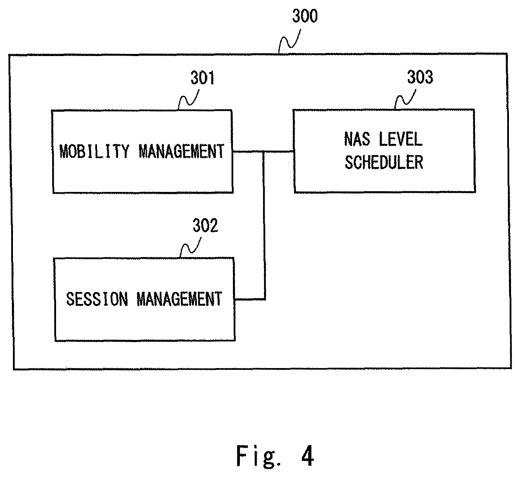

Fig. 4 shows a configuration example of the MME 300. In the example shown in Fig. 4, the MME 300 includes a mobility management unit 301, a session management unit 302, and a NAS level scheduler 303. The mobility management unit 301 performs mobility management regarding the UE 100, and the session management unit 302 performs session management (bearer management) regarding the UE 100. The mobility management unit 301 and the session management unit 302 exchange NAS messages with the UE 100, exchange signaling messages with the eNB 200 through the S1-MME interface, exchange signaling messages with the S-GW 310 through the S11 interface, and exchange signaling messages with the Home Subscriber Server (HSS) over the S6a interface.

The NAS level scheduler 303 is coupled to the mobility management unit 301 and the session management unit 302 and executes the NAS level communication scheduling including allocation of the communication allowed time or allowed cycle to the UE 100.

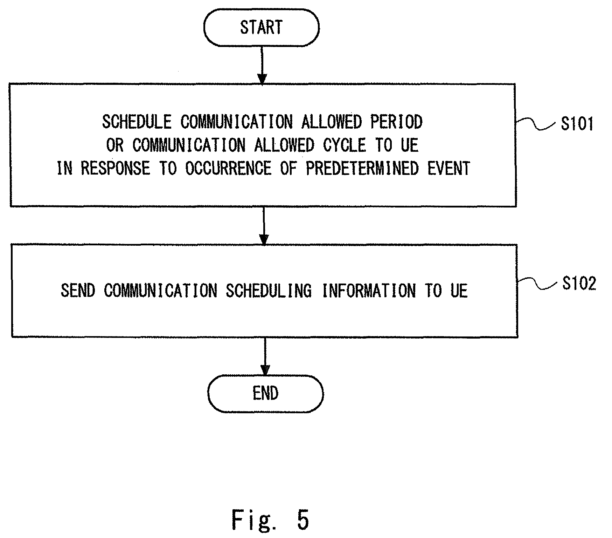

Fig. 5 is a flowchart showing an example of an operation of the MME 300. In the step S101, in response to occurrence of a predetermined event, the MME 300 (the NAS level scheduler 303) schedules the communication allowed period or allowed cycle to the UE 100. As has already been mentioned, the predetermined event includes, for example, at least one of (1) transmission of a NAS accept message to the UE 100, (2) transition of the UE 100 from the ECM-IDLE state to the ECM-CONNECTED state, and (3) a detach of the UE 100 (i.e., transition of the UE 100 from the ECM-CONNECTED state to the ECM-IDLE state and also to the EMM-DEREGISTERED state). In the step S102, the MME 300 (the NAS level scheduler 303) sends the communication scheduling information indicating the communication allowed period or allowed cycle to the UE 100.

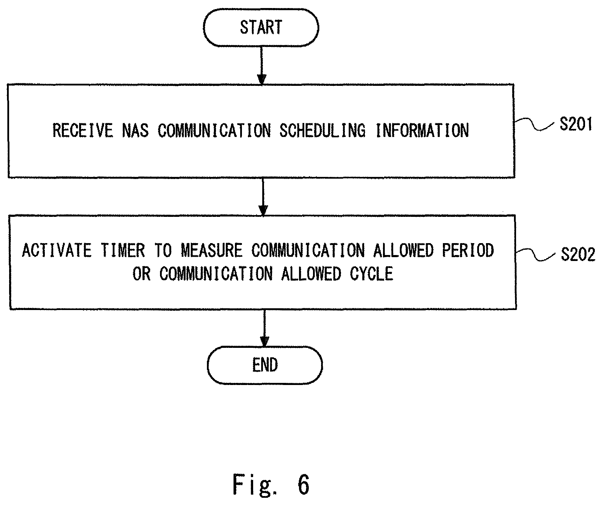

Fig. 6 is a flowchart showing an example of an operation of the UE 100. In the step S201, the UE 100 (the control unit 102) receives the NAS level communication scheduling information from the MME 300. In the step S202, the UE 100 (the control unit 102) activates the timer 103 to measure the communication allowed period or allowed cycle based on the communication scheduling information.

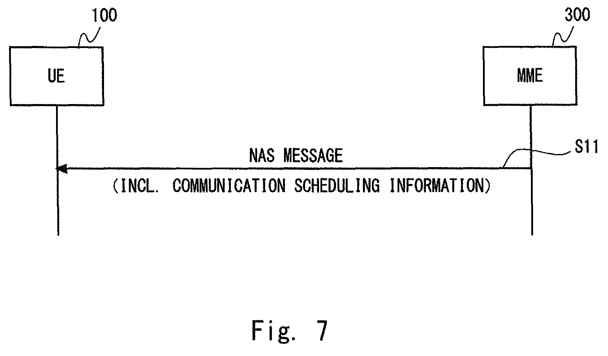

Hereinafter, specific examples of a signaling sequence to deliver the NAS level communication scheduling information to the UE 100 are described. In a first example shown in Fig. 7, the MME 100 sends a NAS message including the communication scheduling information (step S11). As mentioned above, the NAS message in the step S11 is preferably a NAS message different from the NAS reject messages (e.g., Attach reject, Service reject, and TAU reject). The NAS message in the step S11 may be, for example, an Attach Accept message, a TAU Accept message, a Detach Accept message, a Detach request message, a Session Management Request message, or a NAS Deactivate EPS Bearer Context Request message. Alternatively, the NAS message in the step S11 may be a NAS message that is newly defined to send the communication scheduling information.

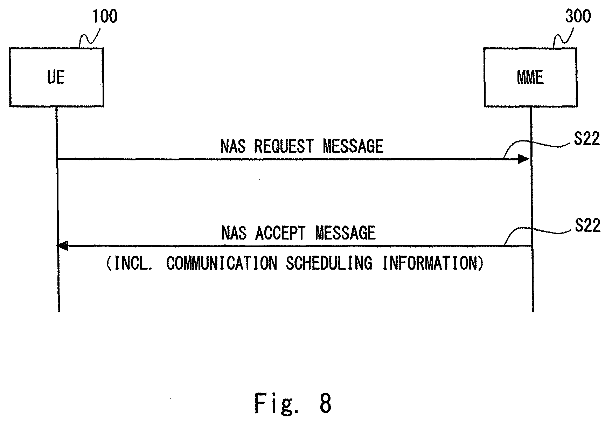

In a second example shown in Fig. 8, when the MME 300 accepts a NAS request message from the UE 100 (step S21), the MME 300 sends a NAS accept message including the communication scheduling information (step S22). The NAS accept message in the step S22 may be, for example, an Attach Accept message, a TAU Accept message, or a Detach Accept message.

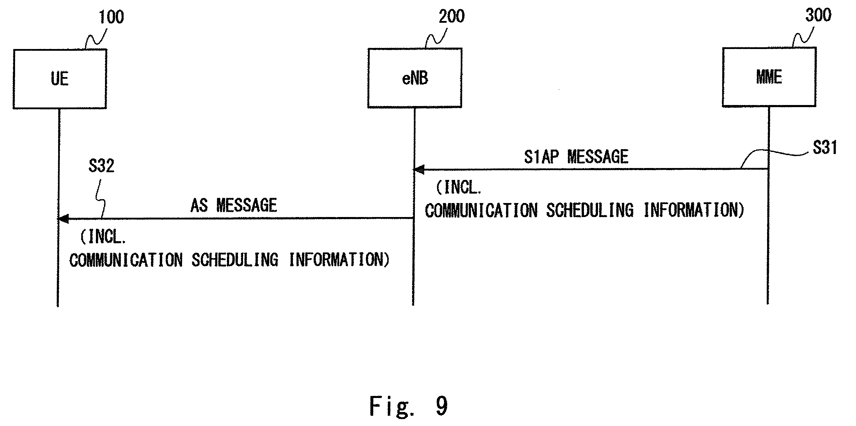

In a third example shown in Fig. 9, the MME 300 sends the NAS level communication scheduling information to the UE 100 using an Access Stratum (AS) message during a procedure in which no NAS message is sent from the MME 300 to the UE 100 (e.g., a Service Request procedure, an S1 release procedure, or a UE requested bearer resource modification procedure to deactivate all dedicated bearers for the UE 100). To be more specific, the MME 300 sends an S1-AP message including the NAS level communication scheduling information to the eNB 200 (step S31). S1-AP messages are signaling messages exchanged between the MME 300 and the eNB 200 in the E-UTRAN 20. The eNB 200 transmits to the UE 100 an AS message (e.g., RRC Connection Reconfiguration message, RRC connection release message) including the NAS level communication scheduling information received from the MME 300 (step S32).

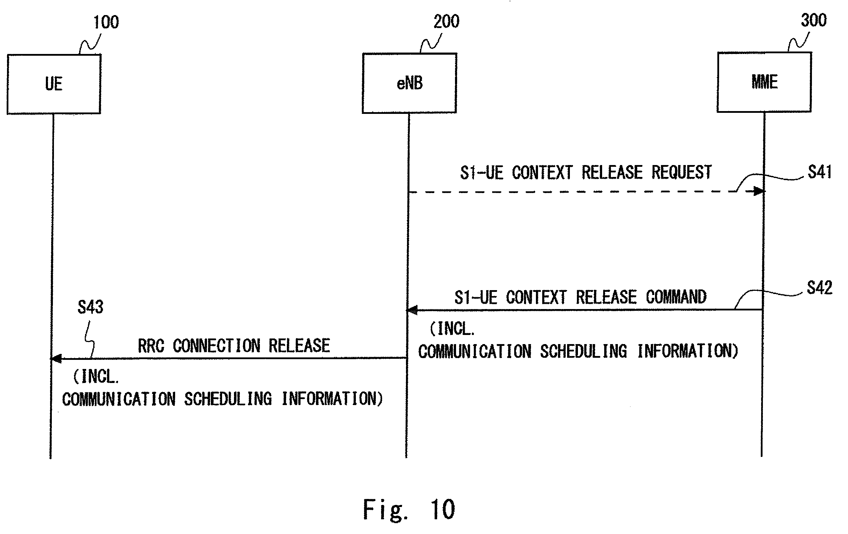

A fourth example shown in Fig. 10 illustrates a more specific case of the above third example. Fig. 10 shows an eNB-initiated or MME-initiated S1 release procedure initiated by the eNB 200 or the MME 300. The S1 release procedure is a procedure for release of the bearer for the UE 100 in the core network 30 and transition of the UE 100 from a state in which the bearer is available (ECM-CONNECTED state) to an idle state in which the bearer is released (ECM-IDLE state). In the step S41, the eNB 200 sends an S1 UE Context Release Request message to the MME 300. The step S41 is performed if the eNB 200 determines that the signaling connection and all the bearers with the UE 100 need to be released. When the MME 300 initiates the S1 release procedure, the step S41 is skipped.

In the step S42, the MME 300 sends an S1 UE Context Release Command message to the eNB 200. The S1 UE Context Release Command message includes the NAS level communication scheduling information, which is sent to the UE 100. In the step S43, the eNB 200 sends an RRC Connection release message to the UE 100 to release the RRC connection with the UE 100. The RRC Connection release message includes the communication scheduling information from the MME 300.

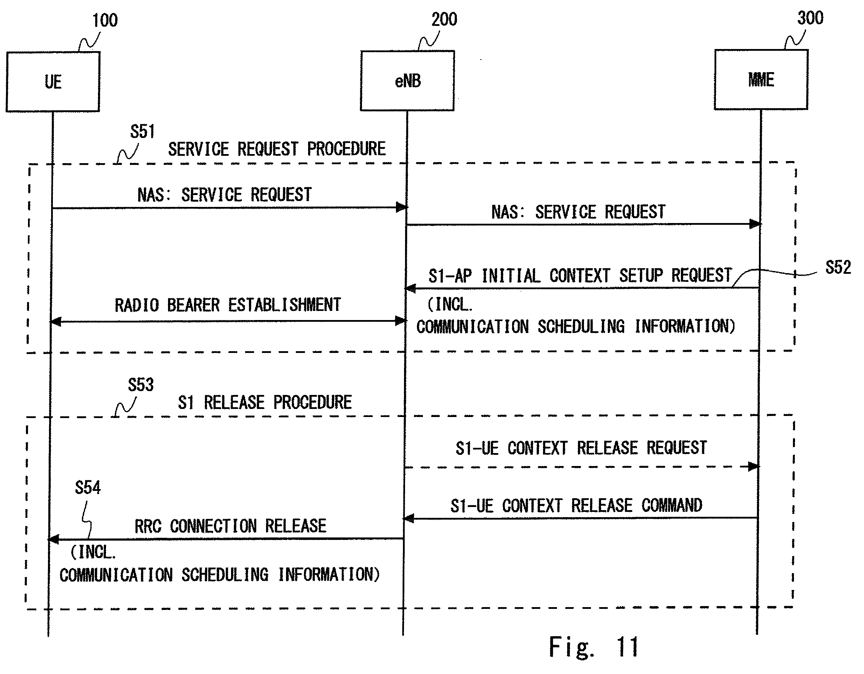

A fifth example shown in Fig. 11 illustrates a more specific case of the above third example. Fig. 11 shows a Service Request procedure (step S51 in Fig. 11) triggered by the UE 100 and an (eNB-initiated or MME-initiated) S1 release procedure (step S53 in Fig. 11) initiated by the eNB 200 or the MME 300. In the example shown in Fig. 11, during the Service Request procedure, the MME 300 sends the communication scheduling information indicating the communication allowed period or allowed cycle corresponding to the attribute of the UE 100 (e.g., terminal type, priority, communication interval, or time tolerance) which has requested the Service Request procedure to the eNB 200. The communication scheduling information may be sent from the MME 300 to the eNB 200 using, for example, an S1-AP Initial Context Setup Request message. The eNB 200 holds the communication scheduling information, which has been received from the MME 300 in the Service Request procedure, for the UE 100.

The S1 release procedure in the step S53 is performed after the UE 100 ends user plane communication using the bearer in the core network 30 that have been established in the Service Request procedure in the step S51. In the step S54, during the S1 release procedure, the eNB 200 sends a RRC Connection release message to the UE 100 in order to release the RRC connection with the UE 100. The RRC Connection release message includes the communication scheduling information, which has been sent from the MME 300 and held in the eNB 200.

In the examples shown in Figs. 9 to 11, the eNB 200 mediates the transmission of the communication scheduling information from the MME 300 to the UE 100. Accordingly, the MME 300 can send the communication scheduling information to the UE 100 during existing procedures where it is difficult to send the NAS messages to the UE 100.

### Second embodiment

In this embodiment, a modified example of the NAS level communication scheduling which has been described in the first embodiment is described. A configuration example of a mobile communication system according to this embodiment is the same as that shown in Fig. 1.

The MME 300 according to this embodiment operates to notify the UE 100 of the communication scheduling information in a similar manner to the first embodiment. The communication scheduling information according to this embodiment may indicate the communication prohibited period in which communication using a bearer in the core network 30 is prohibited. As has been described above, in order to perform the communication scheduling to the UE 100 at a normal time when no congestion is occurring, it is preferred that the MME 300 notifies the UE 100 of the communication scheduling information at any time when the UE 100 is in principle allowed to perform communication. The MME 300 may explicitly notify the UE 100 of one or more communication prohibited periods, for example, in response to: initiation of communication of the UE 100 by allocating bearer resources in the core network 30 to the UE 100 based on a NAS request (e.g., the service request) from the UE 100 for bearer establishment; modification of the established bearer; release of the established bearer; or a detach of the UE 100 from the core network 30. Thus, the MME 300 can schedule the communication prohibited period or prohibited cycle to the UE 100 when the user plane communication of the UE 100 (e.g., data calls and voice calls) is allowed or has already been allowed.

In some implementations, the MME 300 may send the communication scheduling information indicating the communication prohibited period to the UE 100 every time the UE 100, connected to the core network 30, ends communication and transitions from a state in which the UE 100 is connected to the core network 30 (i.e., the ECM-CONNECTED state) to an idle state (i.e., the ECM-IDLE state). The MME 300specifies the communication prohibited period starting from the time of the end of the communication every time when the UE 100 ends the communication, the UE 100 submits this procedure, and thereby the communication cycle of the UE 100 can be scheduled. To be more specific, the MME 300 may send the communication scheduling information to the UE 100 using at least one of a NAS messages and an RRC message of the eNB 200 that are transmitted during a procedure involving a transition of the UE 100 from the ECM-CONNECTED state to the ECM-IDLE state, for example, a procedure for modifying the established bearer for the UE 100 (e.g., UE requested bearer resource modification procedure), a procedure for releasing the established bearers for the UE 100 (e.g., S1 release procedure), or a procedure for detaching the UE 100 from the core network 30 (e.g., detach procedure).

### Third embodiment

In this embodiment, a modified example of the NAS level communication scheduling that has been described in the first and second embodiments is described. A configuration example of a mobile communication system according to this embodiment is similar to that shown in Fig. 1. In the first and second embodiments, examples in which the MME 300 determines the communication schedule of the UE 100, and the MME 300 notifies the UE 100 of the communication schedule information have been described. However, those processes may be performed by the eNB 200 in order to reduce a processing load on the MME 300.

In response to receiving an instruction to start the communication schedule from the MME 300, the eNB 200 according to this embodiment initiates communication scheduling for the UE 100. The eNB 200 may transmit to the UE 100 the communication scheduling information indicating a period or cycle in which communication of the UE 100 is allowed or prohibited. This thus reduces a processing load on the MME 300.

In a similar manner to the first embodiment, the communication scheduling information according to this embodiment may specify the period or cycle in which the UE 100 is allowed to perform communication using a bearer in the core network 30. For example, the communication scheduling information may explicitly indicate a period in which the communication is allowed. In some implementations, the eNB 200 may set the communication allowed period for ten minutes from the minute 00 to 10 every hour and set the communication prohibited period for the remaining 50 minutes every hour. It is obvious that the eNB 200 may perform scheduling by other cycles such as a 30-minute cycle, a two-hour cycle, a twelve-hour cycle, or a 24-hour cycle instead of or in combination with the above one-hour cycle. In some implementations, the eNB 200 may determine the communication allowed cycle applied to the UE 100 based on, for example, a terminal type, priority, traffic amount per communication, communication interval, or time tolerance (delay tolerance) of the UE 100.

Further or alternatively, the eNB 200 may notify the UE 100 of the communication prohibited period in which the communication using a bearer in the core network 30 is prohibited. More specifically, the eNB 200 may notify the UE 100 of the communication prohibited period every time the communication of the UE 100 is ended. The eNB 200 specifies the communication prohibited period starting from the time of the end of the communication every time when the UE 100 ends the communication, the UE 100 submits this procedure, and thereby the communication cycle of the UE 100 can be scheduled. The communication prohibited period may be transmitted during a procedure for modifying the established bearer for the UE 100, a procedure for releasing the established bearer for the UE 100, or a procedure for detaching the UE 100 from the core network 30.

In order to notify the UE 100 of the communication prohibited period, the eNB 200 may use existing Radio Resource Control (RRC) back-off procedure. When the RRC back-off procedure is used, the eNB 200 may use "extended wait time information" to send the communication prohibited period. To be more specific, during an S1 release procedure initiated by the eNB 200 or the MME 300 or during a detach procedure, the eNB 200 may transmit a RRC connection release message including the extended wait time information indicating the communication prohibited period.

It should be noted that the communication scheduling according to this embodiment is clearly distinguished from radio resource scheduling that is performed in a Medium Access Control (MAC) sublayer of the eNB. That is, the radio resource scheduling is a process to allocate downlink or uplink resources for sending user data to a mobile station in the ECM-CONNECTED state and also in the RRC-CONNECTED state. On the other hand, the communication scheduling for the UE 100 described in this embodiment specifies a period or cycle in which the UE 100 is allowed to transition or prohibited from transitioning from the ECM-IDLE state to the ECM-CONNECTED state. The ECM-IDLE state is a state in which the UE 100 is not connected to the core network 30. On the other hand, the ECM-CONNECTED state is a state in which the UE 100 is connected to the core network. The transition from the ECM-IDLE state to the ECM-CONNECTED state includes establishment of an RRC connection between the UE 100 and the eNB 200 and establishment of an S1 connection between the MME 300 and the eNB 200 for the UE 100. In other words, it can be stated that the communication scheduling of this embodiment specifies a period or cycle in which communication (Mobile-Originated (data) call) initiated by the UE 100 is allowed or prohibited.

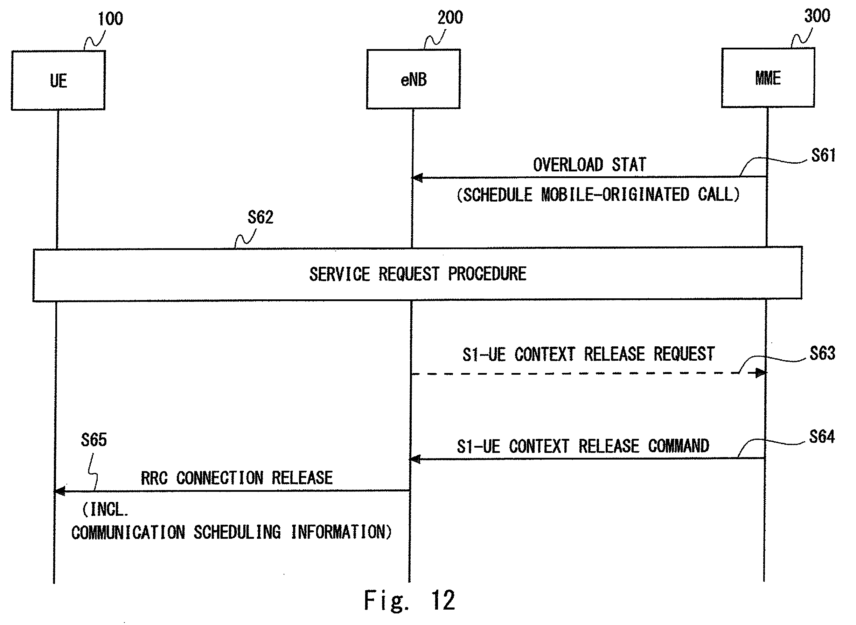

Fig. 12 is a sequence diagram showing a communication control method according to this embodiment. In the step S51, the MME 300 sends an OVERLOAD STAT message to the eNB 200. The OVERLOAD STAT message in the step S61 indicates that communication (Mobile-Originated (data) call) initiated by the UE 100 should be scheduled by the eNB 200.

In the step S62, the UE 100 initiates a Service Request Procedure to start data communication and performs communication using a bearer in the core network 30.

The steps S63 to S65 indicate a procedure to end the user plane communication (e.g., data call, voice call) of the UE 100 that has been performed based on the step S62. More specifically, the steps S63 to S65 indicate the S1 release procedure initiated by the eNB 200, in which the Radio Access Bearer (RAB) is released and the UE 100 transitions from the ECM-CONNECTED state to the ECM-IDLE state. The RAB includes the S1 bearer between the eNB 200 and the S-GW 310 and the radio bearer between the eNB 200 and the UE 100.

In the step S63, the eNB 200 sends an S1 UE Context Release Request message to the MME 300. The step S63 is performed if the eNB 200 determines that the signaling connection and all the radio bearers with the UE 100 need to be released. When the MME 300 initiates the S1 release procedure, the step S63 is skipped.

In the step S64, the MME 300 sends an S1 UE Context Release Command message to the eNB 200. In the step S65, in response to receiving the S1 UE Context Release Command message, the eNB 200 sends an RRC Connection release message to the UE 100 in order to release the RRC connection with the UE 100. The RRC Connection release message includes the communication scheduling information generated by the eNB 200. The communication scheduling information may indicate the communication allowed period or allowed cycle or may indicate the communication prohibited period or prohibited cycle.

The S1 release procedure indicated in the steps S63 to S65 is merely an example. Releasing the radio access bearer to end the communication of the UE 100 may be performed during a detach procedure or during a bearer resource modification procedure that is requested by the UE 100 (i.e., UE requested bearer resource modification procedure). The eNB 200 may send the communication scheduling information to the UE 100 using a RRC connection release message transmitted during the detach procedure or the UE requested bearer resource modification.

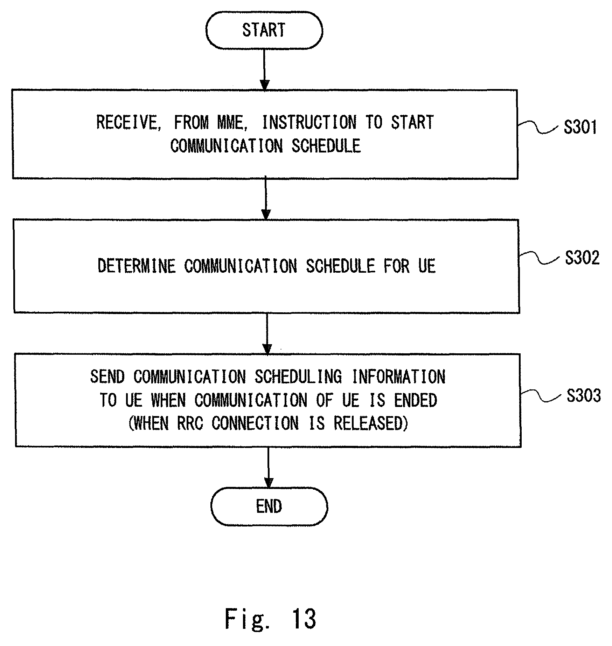

Fig. 13 is a flowchart showing an example of an operation of the eNB 200 according to this embodiment. In the step S31, the eNB 200 receives from the MME 300 an instruction to start the communication scheduling. The instruction to start the communication scheduling includes the information necessary for the eNB 200 to determine the communication cycle of the UE 100. For example, the instruction to start the communication scheduling may indicate the communication allowed cycle (e.g., communication is allowed for ten minutes every hour). Alternatively, the instruction to start the communication scheduling may indicate lengths of the communication allowed period and the communication prohibited period (e.g., the allowed period is ten minutes and the prohibited period is 50 minutes). Moreover, the instruction to start the communication scheduling may indicate that the eNB 200 should specify different communication allowed cycles for different terminal types or priorities of radio terminals.

In the step S32, the eNB 200 determines the communication schedule to be applied to the UE 100 (e.g., the communication allowed period or the communication prohibited period) based on the instruction to start the communication scheduling from the MME 300. The eNB 200 may determine the communication allowed period, the communication allowed cycle, the communication prohibited period, or the communication prohibited cycle to be applied to the UE 100 based on a terminal attribute such as a terminal type, priority, traffic amount per communication, communication interval, and time tolerance (delay tolerance) of the UE 100. The eNB 200 may adjust the communication allowed period, the communication allowed cycle, the communication prohibited period, or the communication prohibited cycle to be applied to the UE 100 according to a difference in the terminal attributes. For example, different communication allowed periods may be applied to UEs 100 that have different terminal types each other.

In the step S33, the eNB 200 sends the communication scheduling information to the UE 100 when the communication of the UE 100 is ended (i.e., when the RRC connection is released).

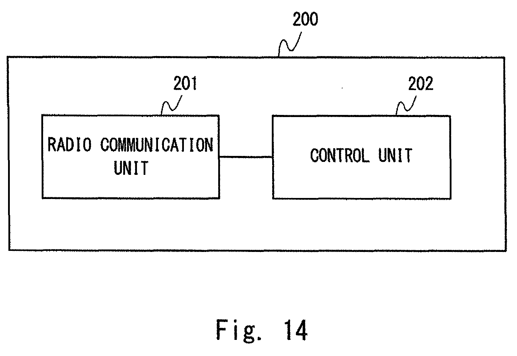

Fig. 14 is a block diagram showing a configuration example of the eNB 200 according to this embodiment. In the example shown in Fig. 5, the eNB 200 includes a radio communication unit 201 and a control unit 202. The radio communication unit 201 includes a function to communicate with UEs 100. The control unit 202 exchanges signaling messages with each UE 100 and the MME 300 to notify each UE 100 of the above communication schedule information.

### Other embodiments

In the above embodiments, examples in which the mobility management node 300 or the eNB 200 notify the UE 100 of the communication scheduling information have been described. However, another core network apparatus different from the mobility management node 300 may notify the UE 100 of the communication scheduling information.

The above embodiments are described with reference to the EPS. However, the disclosure of the above embodiments can be applied to the UMTS or other mobile communication systems.

The processes performed by the mobility management node 300, the radio terminal 100, and the base station 200 related to the NAS level communication scheduling described in the above embodiments may be implemented by a semiconductor processing apparatus including an Application Specific Integrated Circuit (ASIC). Moreover, these processes may be implemented by causing a computer system including at least one processor (e.g., a microprocessor, an MPU, and a Digital Signal Processor (DSP)) to execute a program. To be more specific, one or more programs including instructions that cause a computer system to perform an algorithm related to the NAS level communication scheduling that has been described using the flowcharts, sequence diagrams and the like may be created, and the program(s) may be supplied to a computer.

These program(s) can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives), optical magnetic storage media (e.g., magnetooptical disks), CD-read only memory (ROM), CD-R, CD-R/W, and semiconductor memories (e.g., mask ROM, programmable ROM (PROM), erasable PROM (EPROM), flash ROM, random access memory (RAM)). The program(s) may be provided to a computer using any type of transitory computer readable media. Examples of transitory computer readable media include electric signals, optical signals, and electromagnetic waves. Transitory computer readable media can provide the program(s) to a computer via a wired communication line (e.g., electric wires, and optical fibers) or a wireless communication line.

The above embodiments are merely exemplification of application of technical ideas achieved by the present inventor. That is, it is obvious that the technical ideas are not limited only to the above-mentioned embodiments, and various modifications can be made therein.

For example, the technical ideas achieved by the present inventor include the following supplementary notes.

### (Supplementary note 1)

A core network apparatus within a core network of a mobile communication system, the core network apparatus including a control unit configured to exchange Non-Access Stratum (NAS) messages with a radio terminal via a radio access network and notify the radio terminal of communication scheduling information, in which
the communication scheduling information specifies for the radio terminal a time, period, or cycle in which the radio terminal is allowed or prohibited from performing communication using a bearer in the core network, and
the communication scheduling information is sent to the radio terminal using a first NAS message or a first Access stratum (AS) message that is sent in response to: modification of the bearer already established; release of the bearer already established; or a detach of the radio terminal from the core network.

### (Supplementary note 2)

The core network apparatus according to Supplementary note 1, in which the communication scheduling information indicates a wait time during which the radio terminal should refrain from performing communication.

### (Supplementary note 3)

The core network apparatus according to Supplementary note 1, in which the communication scheduling information indicates a period or cycle in which the radio terminal is allowed to perform communication.

### (Supplementary note 4)

The core network apparatus according to any one of Supplementary notes 1 to 3, in which
the first NAS message includes at least one of a Detach Request message and a Detach Accept message, and
the first AS message includes an RRC connection release message that is transmitted during a UE requested bearer resource modification procedure, an S1 release procedure, or a detach procedure.

### (Supplementary note 5)

A radio terminal including a control unit configured to receive communication scheduling information from a core network apparatus or a base station, in which
the communication scheduling information specifies a time, period, or cycle in which the radio terminal is allowed or prohibited from performing communication using a bearer in a core network, and
the communication scheduling information is sent to the radio terminal using a first NAS message or a first Access stratum (AS) message that is sent in response to: modification of the bearer already established; release of the bearer already established; or a detach of the radio terminal from the core network.

### (Supplementary note 6)

The radio terminal according to Supplementary note 5, in which the control unit activates at least one timer measuring the period or the cycle, in which the radio terminal is allowed or prohibited from performing communication using the bearer, based on the communication scheduling information.

### (Supplementary note 7)

The radio terminal according to Supplementary note 5 or 6, in which
the first NAS message includes at least one of a Detach Request message and a Detach Accept message, and
the first AS message includes an RRC connection release message that is transmitted during a UE requested bearer resource modification procedure, an S1 release procedure, or a detach procedure.

### (Supplementary note 8)

A base station within a radio access network of a mobile communication system, the base station including a control unit configured to notify a radio terminal of communication scheduling information, in which
the communication scheduling information specifies a time, period, or cycle in which the radio terminal is allowed or prohibited from performing communication using a bearer in a core network, and
the communication scheduling information is sent to the radio terminal using a first Access stratum (AS) message that is sent in response to: modification of the bearer already established; release of the bearer already established; or a detach of the radio terminal from the core network.

### (Supplementary note 9)

The base station according to Supplementary note 8, in which the communication scheduling information indicates a wait time during which the radio terminal should refrain from performing communication.

### (Supplementary note 10)

The base station according to Supplementary note 8, in which the communication scheduling information indicates a period or cycle in which the radio terminal is allowed to perform communication.

### (Supplementary note 11)

The base station according to any one of Supplementary notes 8 to 10, in which the first AS message includes an RRC connection release message that is transmitted during a UE requested bearer resource modification procedure, an S1 release procedure, or a detach procedure.

### (Supplementary note 12)

The base station according to any one of Supplementary notes 8 to 11, in which the control unit is configured to send the communication scheduling information to the radio terminal every time the radio terminal transitions from a state in which the radio terminal is connected to the core network to an idle state after the radio terminal is connected to the core network and performs communication.

### (Supplementary note 13)

The base station according to any one of Supplementary notes 8 to 12, in which the control unit is configured to receive, from a core network apparatus, information indicating the time, period, or cycle to be specified to the radio terminal by the communication scheduling information.

### (Supplementary note 14)

The base station according to any one of Supplementary notes 8 to 12, in which the control unit is configured to determine the time, the period, or the cycle by itself.

### (Supplementary note 15)

The base station according to any one of Supplementary notes 8 to 14, in which the control unit configured to adjust the time, period, or cycle, in which the radio terminal is allowed or prohibited from performing communication, according to a difference in a terminal attribute of the radio terminal, the terminal attribute including at least one of a terminal type, priority, traffic amount per communication, communication interval, and time tolerance of the radio terminal.

### (Supplementary note 16)

A communication control method performed by a core network apparatus within a core network of a mobile communication system, the communication control method including:
notifying a radio terminal of communication scheduling information that specifies a time, period, or cycle in which the radio terminal is allowed or prohibited from performing communication using a bearer in the core network, in which
the communication scheduling information is sent to the radio terminal using a first NAS message or a first Access stratum (AS) message that is sent in response to: modification of the bearer already established; release of the bearer already established; or a detach of the radio terminal from the core network.

### (Supplementary note 17)

The communication control method according to Supplementary note 16, in which the communication scheduling information indicates a wait time during which the radio terminal should refrain from performing communication.

### (Supplementary note 18)

The communication control method according to Supplementary note 16, in which the communication scheduling information indicates a period or cycle in which the radio terminal is allowed to perform communication.

### (Supplementary note 19)

The communication control method according to any one of Supplementary notes 16 to 18, in which
the first NAS message includes at least one of a Detach Request message and a Detach Accept message, and
the first AS message includes an RRC connection release message that is transmitted during a UE requested bearer resource modification procedure, an S1 release procedure, or a detach procedure.

### (Supplementary note 20)

A communication control method performed by a radio terminal, the communication control method including:
receiving communication scheduling information from a core network apparatus or a base station, in which
the communication scheduling information specifies a time, period, or cycle in which the radio terminal is allowed or prohibited from performing communication using a bearer in a core network, and
the communication scheduling information is sent to the radio terminal using a first Non-Access Stratum (NAS) message or a first Access stratum (AS) message that is sent in response to: modification of the bearer already established; release of the bearer already established; or a detach of the radio terminal from the core network.

### (Supplementary note 21)

The communication control method according to Supplementary note 20, further including activating at least one timer measuring the period or the cycle, in which the radio terminal is allowed or prohibited from performing communication using the bearer, based on the communication scheduling information.

### (Supplementary note 22)

The communication control method according to Supplementary note 20 or 21, in which
the first NAS message includes at least one of a Detach Request message and a Detach Accept message, and
the first AS message includes an RRC connection release message that is transmitted during an S1 release procedure, or a detach procedure.

### (Supplementary note 23)

A communication control method performed by a base station within a radio access network of a mobile communication system, the communication control method including:
notifying a radio terminal of communication scheduling information, in which
the communication scheduling information specifies a time, period, or cycle in which the radio terminal is allowed or prohibited from performing communication using a bearer in a core network, and
the communication scheduling information is sent to the radio terminal using a first Access stratum (AS) message that is sent in response to: modification of the bearer already established; release of the bearer already established; or a detach of the radio terminal from the core network.

### (Supplementary note 24)

A program that causes a computer to perform the control method according to any one of Supplementary notes 16 to 23.

The present application is based upon and claims the benefit of priority from Japanese Patent Application No. 2013-227627, filed on October 31, 2013, the entire contents of which are hereby incorporated by reference.

### Reference Signs List

- 20: RADIO ACCESS NETWORK (RAN)
- 30: CORE NETWORK
- 40: EXTERNAL NETWORK
- 100: RADIO TERMINAL
- 101: RADIO TRANSCEIVER
- 102: CONTROL UNIT
- 103: TIMER
- 200: BASE STATION
- 300: MOBILITY MANAGEMENT NODE
- 301: MOBILITY MANAGEMENT UNIT
- 302: SESSION MANAGEMENT UNIT
- 303: NAS LEVEL SCHEDULER
- 310: TRANSFER NODE
- 320: TRANSFER NODE

## Claims

1. A core network apparatus within a core network of a mobile communication system, the core network apparatus comprising:
control means for exchanging Non-Access Stratum (NAS) messages with a radio terminal via a radio access network and notifying the radio terminal of communication scheduling information, the communication scheduling information specifying a period or cycle in which the radio terminal is allowed to perform communication using a bearer in the core network.

2. The core network apparatus according to Claim 1, wherein the control means sends the communication scheduling information to the radio terminal using a NAS accept message indicating that a NAS request message from the radio terminal has been accepted.

3. The core network apparatus according to Claim 2, wherein the NAS accept message includes at least one of an Attach Accept message, a Tracking Area Update (TAU) Accept message, and a Detach Accept message.

4. The core network apparatus according to any one of Claims 1 to 3, wherein the control means sends the communication scheduling information to the radio terminal in response to: establishment of the bearer; modification of the bearer already established; release of the bearer already established; or a detach of the radio terminal from the core network.

5. The core network apparatus according to any one of Claims 1 to 4, wherein the control means sends the communication scheduling information to the radio terminal using a NAS message when the bearer has been established for the radio terminal and is available for the radio terminal.

6. The core network apparatus according to Claim 5, wherein the NAS message includes at least one of a Tracking Area Update (TAU) Accept message, a Session Management Request message, and a NAS Deactivate EPS Bearer Context Request message.

7. The core network apparatus according to any one of Claims 1 to 6, wherein the control means sends the communication scheduling information to the radio terminal during a bearer release procedure for transition of the radio terminal from a state in which the bearer is available for the radio terminal to an idle state in which the bearer is released.

8. The core network apparatus according to Claim 7, wherein the communication scheduling information is sent using a first message at AS level in the radio access network during the bearer release procedure.

9. The core network apparatus according to Claim 8, wherein the first message includes an RRC connection release message.

10. The core network apparatus according to any one of Claims 1 to 9, wherein the control means sends the communication scheduling information to the radio terminal during a detach procedure for the radio terminal to detach from the core network.

11. The core network apparatus according to Claim 10, wherein the communication scheduling information is sent using a Detach Request message sent from the core network apparatus during a detach procedure initiated by the radio terminal or using a Detach Accept message sent from the core network apparatus in a detach procedure initiated by the core network.

12. A radio terminal comprising:
control means for exchanging Non-Access Stratum (NAS) messages with a core network apparatus via a radio access network and receiving communication scheduling information from the core network apparatus, the communication scheduling information specifying a period or cycle in which the radio terminal is allowed to perform communication using a bearer in a core network.

13. The radio terminal according to Claim 12, wherein the control means receives the communication scheduling information using a NAS accept message indicating that a NAS request message from the radio terminal has been accepted.

14. The radio terminal according to Claim 13, wherein the NAS accept message includes at least one of an Attach Accept message, a Tracking Area Update (TAU) Accept message, and a Detach Accept message.

15. The radio terminal according to any one of Claims 12 to 14, wherein the control means receives the communication scheduling information in response to: establishment of the bearer; modification of the bearer already established, release of the bearer already established, or a detach from the core network.

16. The radio terminal according to any one of Claims 12 to 15, wherein the control means receives the communication scheduling information using a NAS message when the bearer has been established for the radio terminal and is available for the radio terminal.

17. The radio terminal according to any one of Claims 12 to 16, wherein the control means activates at least one timer for measuring the period or the cycle, in which the radio terminal is allowed to perform communication using the bearer, based on the communication scheduling information.

18. The radio terminal according to Claim 17, wherein the at least one timer includes a first timer that measures the period in which the radio terminal is allowed to perform communication using the bearer, and a second timer that measures a period in which the radio terminal is prohibited from performing communication using the bearer.

19. A communication control method performed by a core network apparatus within a core network of a mobile communication system, the communication control method comprising:
notifying a radio terminal of communication scheduling information, the communication scheduling information specifying a period or cycle in which the radio terminal is allowed to perform communication using a bearer in the core network.

20. A communication control method performed by a radio terminal, the communication control method comprising:
receiving communication scheduling information from a core network apparatus, the communication scheduling information specifying a period or cycle in which the radio terminal is allowed to perform communication using a bearer in a core network.

21. A non-transitory computer readable medium storing a program that causes a computer to perform a communication control method performed by a core network apparatus within a core network of a mobile communication system, wherein
the communication control method comprises notifying a radio terminal of communication scheduling information that specifies a period or cycle in which the radio terminal is allowed to perform communication using a bearer in the core network.

22. A non-transitory computer readable medium storing a program that causes a computer to perform a communication control method performed by a radio terminal, wherein
the communication control method comprises receiving, from a core network apparatus, communication scheduling information that specifies a period or cycle in which the radio terminal is allowed to perform communication using a bearer in a core network.
